# EUROPÄISCHE PATENTANMELDUNG

(11) **EP 0 776 929 A2**
(43) Veröffentlichungstag der Anmeldung: **04.06.1997**
(21) Anmeldenummer: 96118613.7
(22) Anmeldetag: 20.11.1996
(51) Int. Cl.: C08J 9/18, C08J 9/228, C08J 9/14

(54) **Schaumstoffe auf Basis von Copolymeren von Styrol und 1,1-Diphenylethen**

(30) Priorität: 29.11.1995 DE 19544487
(71) Anmelder: BASF AKTIENGESELLSCHAFT, 67056 Ludwigshafen (DE)
(72) Erfinder: Walter, Manfred, Dr., 67346 Speyer (DE); Knoll, Konrad, Dr., 67069 Ludwigshafen (DE); Schneider, Michael, Dr., 67434 Neustadt (DE); Wassmer, Karl-Heinz, Dr., 67112 Mutterstadt (DE)

(57) **Zusammenfassung**

Schaumstoffe auf Basis von Copolymeren des Styrols mit 2 bis 50 Mol-% 1,1-Diphenylethen weisen eine hohe Wärmeformbeständigkeit auf.

## Beschreibung

Die Erfindung betrifft Schaumstoffe aus Styrolpolymerisaten mit erhöhter Wärmeformbeständigkeit.

Schaumstoffe auf Basis von Styrolpolymerisaten mit hoher Wärmeformbeständigkeit sind bekannt, z.B. auf Basis von Copolymeren des Styrols mit Maleinsäure oder N-substituiertem Maleinimid oder von Mischungen von Polystyrol mit Polyphenylenether oder Polyphenylensulfid. Diese Schaumstoffe sind aber mit verschiedenen Nachteilen behaftet. Der Erfindung lag daher die Aufgabe zugrunde, weitere Schaumstoffe auf Basis von Styrolpolymerisaten mit erhöhter Wärmeformbeständigkeit bereitzustellen.

Diese Aufgabe wird gelöst durch Schaumstoffe auf Basis von Copolymerisaten aus Styrol und 2 bis 50 Mol% 1,1-Diphenylethen.

Die Erfindung geht aus von Copolymeren des Styrols mit 2 bis 50, vorzugsweise 5 bis 45 und insbesondere 10 bis 40 Mol% 1,1-Diphenylethen. Das Copolymere kann auch bis zu 20 Mol% anderer Comonomerer, beispielsweise α-Methylstyrol, Kernalkylierte Styrole, Acrylnitril oder Maleinsäureanhydrid einpolymerisiert enthalten.

Die Herstellung der Copolymeren aus Styrol und 1,1-Diphenylethen erfolgt durch anionische Copolymerisation mit Hilfe von z.B. Butyllithium in geeigneten Lösungsmitteln. Das Comonomerverhaltnis kann zwischen 2 % Diphenylethen bis zu 50 Mol% beliebig eingestellt werden. Auch Blockcopolymere sind darstellbar. Die Copolymerisation wird z.B. beschreiben von E. Ureta, I.Smid, M.Szwarc, J.Polym. Sci., Part A: Polymer Chem. 1966, 4, 2219 oder H.Yuki, I.Hotta, Y.Okamoto, S.Murahashi,Bull.Chem.Soc.Japan 1967, 40, 2659; ferner in WO 95/34568.

Die erfindungsgemäßen Schaumstoffe können in verschiedenen Formen vorliegen: als Perlen mit einem Durchmesser von 0,2 bis 10 mm; als Formteile, die aus verschweißten Perlen bestehen; aus Platten einer Dicke von 15 bis 200 mm und als Folie einer Dicke von 1 bis 12 mm. Die Dichte kann in weiteren Grenzen zwischen 8 und 100 g·l⁻¹ schwanken, bevorzugt liegt sie zwischen 10 und 80 g·l⁻¹.

Die Minigranulatherstellung erfolgt nach der üblichen Methode. Das Copolymere wird in einem Extruder aufgeschmolzen und die Zuschlagstoffe werden eingemischt. Verschiede Methoden des Abschlages sind anwendbar: Heiß- oder Kaltabschlag, Unterwassergranulierung und Ringkanalabschlag. Zuschlagstoffe können sein: Antioxidantien, Lichtstabilisatoren, Farbstoffe, Zellkeimbildner, Flammschutzmittel wie z.B Hexabromcyclododecan oder andere aliphatische Bromverbindungen und Synergisten für das Flammschutzmittel, wie Peroxide oder Dicumyl, Zinn Verbindungen als Stabilisatoren für das Flammschutzmittel, Antistatika u.s.w. Die Flammschutzmittel werden in Mengen von 0,5 bis 10 Gew.-%, die Synergisten in Mengen von 0,1 bis 1,0 Gew.-%, bezogen auf das Copolymere, zugesetzt.

Bei dem bevorzugten Verfahren zur Herstellung der Schaumperlen wird das Minigranulat zur wäßrigen Phase gegeben, vorzugsweise im Phasenverhältnis 0,1:1 bis 1,3:1. Es sind übliche Suspensions-Stabilisatoren erforderlich, entweder anorganische Dispergatoren wie Tricalciumphosphat oder Magnesium-Pyrophosphat plus Seifen, oder organische Schutzkolloide wie Cellulosederivate oder teilverseifte Polyvinylester. Zur Imprägnierung werden flüchtige Treibmittel, wie Propan, Butan, Pentan, Cyclopentan, Cyclohexan oder Kohlendioxid der Suspension zugesetzt, vorzugsweise in Mengen von 2 bis 10 Gew.-%, bezogen auf das Polymere. Die Imprägniertemperaturen liegen entsprechend der Menge an Diphenylethen im Copolymeren höher als bei Polystyrol, etwa der Glastemperatur des Copolymeren entsprechend, wenn übliche Imprägnierzeiten von ca. 2 bis 10 h angewendet werden. Bevorzugt wird zwischen 100 und 180°C, bei einem Druck zwischen 5 und 20 bar nachimprägniert.

Die Nachimprägnierbedingungen werden vorteilhaft auch so gewählt, daß die nachimprägnierten Perlen Kugelgestalt annehmen, also eine Umperlung stattfindet.

Nach beendeter Nachimprägnierung wird die Suspension abgekühlt und das treibmittelhaltige Granulat wird abgetrennt, gewaschen und getrocknet. Das Granulat wird dann oberflächlich beschichtet. Diese Beschichtungen haben unterschiedliche Funktionen, wie z.B. Verhinderungen von elektrostatischer Aufladbarkeit, Verkürzung der Entformzeit bei der Formkörperherstellung u.s.w.

Bevorzugte Beschichtungsmittel sind: Erdalkalimetallstearate, feinteilige Kieselsäuren, N,N'-Distearylethylendiamin, Mono-, Di- und Tristearate von Glycerin, Zitronensäuretristearylester Sorbitanfettsäureester, C₁₂-C₂₀-Alkylsulfonate, Fettsäurediethanolamide und Cholinesterchloride.

Die treibmittelhaltigen Copolymerteilchen sind in verschlossenen Behältnissen lagerfähig.

Das Vorschäumen erfolgt durch Erwärmung des Granulates in geeigneten Apparaturen durch Energiezufuhr. Die Energiezufuhr kann durch Heißluft, Wasserdampf, überhitzten Wasserdampf, IR, UV, Mikrowelle oder Hochfrequenz erfolgen. Besonders geeignet ist ein Vorschäumen in Druckvorschäumern mit Wasserdampf. Nach dem Vorschäumen werden die geschäumten Perlen zum Druckausgleich zwischengelagert. Die Zwischenlagerung erfolgt bei Raumtemperatur und Normaldruck für die Dauer von 2-24 h oder auch länger.

Bei einer anderen Ausführungsform zur Herstellung der Schaumperlen wird Minigranulat ebenfalls in wäßriger Suspension - wie oben beschrieben - mit einem flüchtigen Treibmittel imprägniert, die Suspension wird aber nicht abgekühlt sondern durch eine geeignete Austrittsvorrichtung aus dem Imprägnierreaktors direkt entspannt. Dabei schäumen die treibmittelhaltigen Teilchen direkt zu Schaumperlen auf.

Zur Herstellung von Formkörpern werden die vorgeschäumten Perlen in einer geeigneten Form durch erneute Energiezufuhr nachgeschäumt und verschweißt. Die Energiezufuhr geschieht vorzugsweise durch Wasserdampf unter einem entsprechenden Druck in einer nicht gasdicht schließenden Form. Gegebenenfalls werden die Schaumperlen vor der Verschweißung durch Lagerung unter Druck mit einem gewissen Vordruck beladen oder in der Form durch Kompression vorverdichtet . Nach einer weitgehenden Abkühlung können die fertigen Formkörper aus der Form entnommen werden. Nach einer anschließenden Trocknung sind sie gebrauchsfertig.

Zur Herstellung von Schaumstoff-Platten oder - Folien wird das Copolymer bei Temperaturen von 180 bis 280°C in einem Extruder plastifiziert und mit einem flüchtigen Treibmittel innig vermischt. Als Treibmittel kommen Fluorchlorkohlenwasserstoffe oder Fluorkohlenwasserstoffe in Frage, wie z.B. 1.1,1-Difluorchlorethan, Difluorchlormethan und 1,1-Difluorethan, ferner Ethanol, Dimethylether, Aceton, Isopentan, Pentan und Kohlendioxid sowie deren Mischungen. Auch hierbei können die oben beschriebenen Hilfsmittel zugesetzt werden. Die Schmelze wird dann durch eine Breitschlitzdüse ausgepreßt und kalibriert.

Die in den Beispielen genannten Teile und Prozente beziehen sich auf das Gewicht.

Die erfindungsgemäßen Schaumstoffe zeichnen sich gegenüber üblichen Polystyrol - Schaumstoffen durch eine erhöhte Wärmeformbeständigkeit und verbesserte Lösungsmittelbeständigkeit aus. Dementsprechend sind auch die Anwendungen der Schaumstoffe, beispielsweise für Isolierungen im Heißwasserbereich oder Teile im Geräte- oder Automobilbau, stoßdämpfende Verpackungen usw.

### Beispiele

1. Minigranulierung
   a) Mit einem Extruder ZSK 25 (Werner u. Pfleiderer) wurde ein Styrol-1,1-Diphenylethen-Copolymeres mit einer Tg von 120°C und einem 1,1-Diphenylethen-Gehalt von 14,2 % unter Zusatz von 0,2 % Irganox 1076 (Ciba-Geigy) und 0,1 % feinteiligem PE-Wachs (AF 31 Wachs, BASF) minigranuliert. Die zylinderförmigen Teilchen hatten ein durchschnittliches Gewicht von 1,2 mg. Granulat 1A.
   b) In gleicher Weise wie unter a) wurde verfahren mit einem ein Styrol-1,1-Diphenylethen-Copolymeren mit einer Tg von 135°C und einem 1,1-Diphenylethen-Gehalt von 26,2 %. Die zylinderförmigen Teilchen hatten ein durchschnittliches Gewicht von 1,5 mg. Granulat 1B.
   c) Es wurde wie unter a) verfahren, nur daß zusätzlich 2 % HBCD (Hexabromcyclododecan) und 0,1 % Dibutylzinndilaurat in das Minigranulat eingearbeitet wurden. Die zylinderförmigen Teilchen hatten ein durchschnittliches Gewicht von 1,3 mg. Granulat 1C.
2. Nachimprägnierung der Granulate 1A - 1C
   a) Granulat 1A
      In einem druckfesten 20 l-Rührkessel wurden vorgelegt:
      - 18,5 kg: VE-Wasser
      - 0,078 kg: Na₄P₂O₇
      - 0,16 kg: MgSO₄ · 7 H₂O
      - 0,012 kg: n-C₁₅-Na Alkylsulfonat (Emulgator K 30)

      Nach 30 min Rührung wurde 1 kg Granulat 1A in den Kessel zugegeben. Anschließend wurde der Kessel verschlossen und das folgende Temperatur-Zeit-Programm abgefahren:
      - in 4 h von: RT auf 117,5°C
      8 h bei 117,5°C
      - in 4 h von: 117,5°C auf RT

      Ab 100°C wurden innerhalb von 3 h langsam 0,35 kg Pentan (technisches Gemisch) zugegeben.
      Nach Beendigung der Imprägnierung waren die Teilchen nicht verklebt und kugelförmig. Sie wurden mit verdünnter Salpetersäure behandelt und anschließend mit reichlich Wasser gewaschen. Nach der Trocknung (16 h bei Raumtemperatur ausgelegt) hatten die Teilchen einen Pentangehalt von 7,7 %. Expandierbares Granulat 2A.
   b) Granulat 1B
      Es wurde verfahren wie unter 2a) mit den Änderungen, daß Granulat 1B verwendet wurde und die Plateautemperatur beim Zmprägnierzyklus auf 132,5°C angehoben wurde. Die Pentandosierung begann bei 115°C. Die erhaltenen Teilchen waren nicht verklebt und kugelförmig, der Pentangehalt nach Trocknung betrug 7,3 %. Expandierbares Granulat 2B.
   c) Granulat 1C
      Es wurde verfahren wie unter 2a) mit den Änderungen, daß Granulat 1C verwendet wurde und daß die 0,35 kg Pentan zusätzlich 0,005 kg Dicumylperoxid enthielten. Die erhaltenen Teilchen waren nicht verklebt und kugelförmig, der Pentangehalt nach Trocknung betrug 7,8 %. Expandierbares Granulat 2C.
3. Lagerfähigkeit der treibmittelhaltigen Teilchen
   Das treibmittelhaltige Granulat 2A wurde bei Raumtemperatur in dünner Schicht offen ausgelegt. Die Treibmittelgehalte wurden nach verschiedenen Zeiten ermittelt. Es wurden die in Tabelle 1 zusammengestellten Werte gemessen.

**Tabelle 1**

| Treibmittelgehalte des Granulates 2A in Abhängigkeit von der Lagerzeit | |
|---|---|
| Lagerzeit [h] | Pentangehalt [%] |
| 0 | 7,7 |
| 16 | 7,65 |
| 48 | 7,0 |
| 72 | 6,8 |
| 96 | 6,75 |
| 120 | 6,6 |

Damit sind die expandierbaren Teilchen im verschlossenen Gefäß zumindest mehrere Monate lagerfähig.
4. Vorschäumen der treibmittelhaltigen Granulate
   Die treibmittelhaltigen Granulate 2A, 2B und 2C wurden jeweils mit 0,2 % einer 1:1-Mischung aus einer feinteiligen Fällungskieselsäure (FK 320, Degussa) und Glycerinmonostearat beschichtet. Die Beschichtung erfolgte durch 10minütige Behandlung in einem Schaufelmischer (Fa. Lödige). Die so vorbereiteten treibmittelhaltigen Teilchen wurden in einem Druckvorschäumer vorgeschäumt. Tabelle 2 zeigt die Schäumbedingungen und die bei den Schäumungen erhaltenen Ergebnisse. Vorgeschäumte Granulate 3A, 3B, 3C.

**Tabelle 2**

| Bedingungen und Ergebnisse bei der Vorschäumung der Granulate 2A, 2B und 2C | | | | | | |
|---|---|---|---|---|---|---|
| Granulat | Schäumbedingungen | | | Ergebnisse | | |
| | Druck [bar] | Temperatur [°C] | Zeit [sec] | Dichte [g/l] | Treibmittelgehalt [%] | Bemerkungen |
| 2A | 0,4 | 110 | 30 | 35,0 | 3,05 | nicht verklebt |
| 2B | 1,4 | 125 | 20 | 35,2 | 2,90 | " |
| 2C | 0,4 | 110 | 30 | 34,8 | 2,95 | " |

5. Ausschäumen
   Die gemäß Beispiel 4) vorgeschäumten Granulate 3A, 3B und 3C wurden nach 20stündiger Zwischenlagerung zwecks Gasaustausch in einer druckfesten Form mit den Abmessungen 10 x 5 x 2,5 cm durch Bedampfung mit Wasserdampf ausgeschäumt. Die dabei angewandten Bedingungen zeigt Tabelle 3.

**Tabelle 3**

| Bedingungen bei der Ausschäumung der Granulate 3A, 3B und 3C | | | |
|---|---|---|---|
| Granulat | Ausschäumbedingungen | | |
| | Druck [bar] | Temperatur [°C] | Zeit [sec] |
| 3A | 1,1 | 122 | 30 |
| 3B | 2,3 | 135 | 30 |
| 3C | 1,1 | 122 | 30 |

In allen drei Fällen wurden Formkörper mit guter Verschweißung und mit praktisch ebenen Oberflächen erhalten. Formkörper 4A, 4B und 4C.
6. Versuche zur Ermittlung der Flammwidrigkeit der Formkörper 4A, 4B und 4C
   Jeweils drei Formkörper aus den Reihen 4A, 4B und 4C wurden in einer Halterung eingespannt und mit einer 3 cm hohen, blauen Flamme eines Bunsenbrenners entzündet. Alle drei Formkörper der Reihen 3A und 3B sind vollständig abgebrannt. In allen drei Fällen der Reihe 3C erloschen die Formkörper sofort, sobald die Flamme des Bunsenbrenners entfernt wurde.

## Patentansprüche

1. Schaumstoffe auf Basis von Styrolpolymerisaten, dadurch gekennzeichnet, daß das Styrolpolymerisat ein Copolymerisat des Styrols mit 2 bis 50 Mol% 1,1-Diphenylethen ist.

2. Schaumstoffe nach Anspruch 1, d.g., daß, sie in Form von Perlen mit einem Durchmesser von 0,2 bis 10 mm und einer Schüttdichte von 8 bis 100 g·l⁻¹ vorliegen.

3. Schaumstoffe nach Anspruch 1, d.g., daß sie als Formteile mit einer Dichte von 8 bis 100 g·l⁻¹ vorliegen, die aus miteinander verschweißten Schaumperlen nach Anspruch 2 bestehen.

4. Schaumstoffe nach Anspruch 1, d.g., daß sie in Form von Platten mit einer Dicke von 15 bis 200 mm und einer Dichte von 8 bis 100 g·l⁻¹ vorliegen.

5. Schaumstoffe nach Anspruch 1, d.g., daß sie in Form von Folien mit einer Dicke von 1 bis 12 mm und einer Dichte von 8 bis 100 g·l⁻¹ vorliegen.

6. Schaumstoffe nach Anspruch 1, dadurch gekennzeichnet, daß sie 0,5 bis 10 Gew.-% eines Flammschutzmittels und gegebenenfalls 0,1 bis 1 Gew.-% eines Synergisten enthalten.

7. Verfahren zur Herstellung der Schaumstoffperlen nach Anspruch 2, d.g., daß man Copolymer-Granulat mit einem mittleren Durchmesser von 0,1 bis 3 mm in wäßriger Suspension bei Temperaturen zwischen 100 und 180°C mit einem flüchtigen Treibmittel imprägniert, die Suspension abkühlt, das treibmittelhaltige Granulat abtrennt und in einem separaten Verfahrensschritte durch Energiezufuhr verschäumt.

8. Verfahren zur Herstellung der Schaumstoffperlen nach Anspruch 2, d.g., daß man Copolymer-Granulat mit einem mittleren Durchmesser von 0,1 bis 3 mm in wäßriger Suspension bei Temperaturen zwischen 100 und 180°C mit einem flüchtigen Treibmittel imprägniert, die noch heiße Suspension entspannt und dadurch das treibmittelhaltige Granulat direkt verschäumt.

9. Verfahren zur Herstellung der Schaumstoff - Formteile nach Anspruch 3, d.g., daß man Schaumstoff - Perlen nach Anspruch 2 in nicht gasdicht schließenden Formen durch Energiezufuhr nachschäumt und miteinander verschweißt.

10. Verfahren zur Herstellung von Schaumstoffplatten nach Anspruch 4 oder Schaumfolien nach Anspruch 5, d.g., daß man in einem Extruder das Copolymere plastifiziert, mit einem flüchtigen Treibmittel innig vermischt und durch eine Breitschlitzdüse unter Verschäumen auspreßt.
